# EUROPÄISCHE PATENTSCHRIFT

(11) **EP 0 861 037 B1**
(45) Veröffentlichungstag und Bekanntmachung des Hinweises auf die Patenterteilung: **20.06.2001**
(21) Anmeldenummer: 96938135.9
(22) Anmeldetag: 07.11.1996
(51) Int. Cl.: A47B 77/10, A47B 77/14

(54) **KÜCHENGERÄT**
KITCHEN APPARATUS
USTENSILE DE CUISINE

(30) Priorität: 16.11.1995 DE 29518155 U
(43) Veröffentlichungstag der Anmeldung: 02.09.1998
(73) Patentinhaber: Göttfert, Johann, 74392 Freudental (DE)
(72) Erfinder: Göttfert, Johann, 74392 Freudental (DE)
(74) Vertreter: Fleck, Hermann-Josef, Dr.-Ing.
(86) Internationale Anmeldenummer: EP9604872
(87) Internationale Veröffentlichungsnummer: WO9717868

(56) Entgegenhaltungen:
- WO-A-94/04059
- DE-A- 4 304 586
- DE-U- 8 712 224
- US-A- 2 226 490

## Beschreibung

Die Erfindung bezieht sich auf ein Küchengerät mit einer an einer senkrechten Wand an einem Arbeitsfeld anbringbaren Vertikalträgereinheit zur Aufnahme von Arbeitsgerät und/oder Speisezutaten und einer an dieser gehaltenen, in eine horizontale Lage schwenkbaren Schneidunterlage.

Ein Küchengerät dieser Art ist in der DE-A 43 04 586 als bekannt ausgewiesen. Bei diesem bekannten Küchengerät ist an einer vertikalen Wandfläche eine Vertikalträgereinheit angebracht, in der Arbeitsgerät aufgenommen und eine Klappe mit einem in ihrer rückseitigen Oberfläche ausgebildeten Schneidbrett abschwenkbar gehalten ist. Die Klappe ist mit einem an ihrem unteren bzw. hinteren Rand ausgebildeten Stabprofil in einer angepassten, längs verlaufenden Mulde der Vertikalträgereinheit gelagert.

In der DE 88 01 525 U1 ist eine auf der Arbeitsplatte parallel zu der vertikalen Wand verschiebbare Schneidplatte angegeben, die auf Rollen gelagert und in einer an der Wand angebrachten horizontalen Schiene geführt ist. Eine derartige Schneidplatte kann hinderlich sein, wenn die Arbeitsplatte für andere Arbeiten oder zum Abstellen von Gegenständen benötigt wird.

Die WO 94/0405 zeigt ein regalartiges Gestell mit mindestens einem horizontal ausgerichteten Ablageboden, der mittels einer Schwenkvorricthung unter Beibehaltung der horizontalen Lage herausschwenkbar ist, so dass darauf befindliche Gegenstände stehen bleiben. Der Ablageboden ist nach vorne herausziehbar und zurückschiebbar. Diese Regaleinrichtung ist in der Tiefe relativ breit und besitzt eine aufwendige Mechanik.

In der DE-U 87 12 224 ist ein abklappbarer Gerätehalter insbesondere zur Aufnahme von Elektrogeräten angegeben.

Die US-A 2,226,490 zeigt ein Tragwerk für Küchenutensilien, wie einen Trinkglashalter, Seifenbehälter, Kleiderhalter und ein Waschbrett. Das gewellte Waschbrett ist an einer Vertikalträgereinheit schwenkbar gehalten und mit einer Stütze in einem Ausguss schräg nach hinten abfallend abstützbar.

Der Erfindung liegt die Aufgabe zugrunde, ein Küchengerät der eingangs erwähnten Art bereit zu stellen, das in Bedienung und Aufbau einfach und vielfältig verwendbar ist.

Diese Aufgabe wird mit den im Patentanspruch 1 angegebenen Merkmalen gelöst.
Hiernach ist also vorgesehen, dass an der Vertikalträgereinheit ein in eine horizontale Lage abschwenkbarer Schwenkträger mit mindestens zwei im abgeschwenkten Zustand nach vorne verlaufenden seitlichen Tiefenstreben gehalten ist und dass die Schneidunterlage an dem Schwenkträger gehalten ist. Im hochgeklappten Zustand steht die Arbeitsplatte zum Abstellen von Gegenständen oder zum Herrichten von Speisen uneingeschränkt zur Verfügung, während für die Schneidarbeit die Schneidunterlage schnell und problemlos ausklappbar ist. Dabei hat die Schneidunterlage einen festen Aufbewahrungsort.

Ist vorgesehen, dass die Schneidunterlage in dem Schwenkträger verschieblich gelagert ist, so kann sie in eine geeignete Arbeitsposition gebracht werden, wodurch die Benutzerfreundichkeit begünstigt wird.

Ein einfacher Aufbau, der zudem eine schnelle Handhabung und gute Führung für die Schneidunterlage bietet, wird dadurch erzielt, dass die Vertikalträgereinheit an ihrem unteren Randbereich eine im montierten Zustand einige Zentimeter von einer Arbeitsfläche beabstandete untere Horizontalstrebe aufweist, an der die Tiefenstreben des Schwenkträgers mit an deren hinteren Enden durch Abbiegen gebildeten Hakenteilen gelenkig gelagert sind, dass die vorderen Enden der Tiefenstreben so weit nach unten abgebogen sind, dass die Tiefenstreben durch die so gebildeten, sich auf der Arbeitsfläche abstützenden Fußabschnitte horizontal ausgerichtet sind und dass die Schneidunterlage seitliche Führungsmittel aufweist, mit denen sie entlang der Tiefenstreben verschiebbar ist. Dabei wird eine gute Führung zum Ausziehen der Schneidplatte ohne zusätzliche Teile dadurch erreicht, dass die Führungsmittel als in einer Schneidplatte seitlich eingebrachte Führungsnuten ausgebildet sind und dass die Fußabschnitte zur Seite abgebogen sind.

Eine vorteilhafte, zusätzliche Verwendungsmöglichkeit ergibt die Maßnahme, dass die Schneidunterlage auf ihrer Unterseite nahe den beiden Schmalseiten jeweils einen Griff sowie einen umlaufenden Rahmen trägt, so dass die Schneidunterlage im umgedrehten Zustand als Servierplatte verwendbar ist.

Der Schwenkträger wird an der Vertikalträgereinheit auf einfache Weise dadurch gehalten, dass die Vertikalträgereinheit zwei seitliche Vertikalstreben aufweist, an denen Halteelemente vorgesehen sind, und dass der Schwenkträger in hochgeschwenktem Zustand mit seinen Tiefenstreben an den Halteelementen festgelegt ist. Die Halteelemente können dabei z.B. von den Vertikalstreben nach vorne abstehende federnde Laschen oder U-förmig gebogene, federnde Drahtelemente sein, an denen die Tiefenstreben des Schwenkträgers einschnappen.

Die Vertikalträgereinheit lässt sich einfach anbringen und abnehmen, wenn vorgesehen ist, dass die Vertikalträgereinheit an einer oberen Horizontalschiene mindestens zwei Haltestücke aufweist, mit denen sie an einem an der senkrechten Wand befestigten Träger anbringbar ist, und dass die Vertikalstreben an ihren unteren Enden zur vertikalen Wand hin abgebogenen Stützteilen auslaufen.
Hierdurch kann die Vertikalträgereinheit auch zusammen mit dem Schwenkträger beispielsweise zum Säubern abgenommen werden.

Eine weitere Zusatzfunktion des Küchengeräts wird dadurch erhalten, dass zwischen den beiden Vertikalstreben oder einer Vertikalstrebe und einer vertikalen Zwischenstrebe oder zwischen zwei vertikalen Zwischenstreben ein an seinem unteren Endbereich gelenkig gelagerter Gerätehalter herausschwenkbar angeordnet ist, dessen Ausschwenkbewegung mittels eines seitlichen, oberhalb der gelenkigen Lagerung beweglich angeordneten Haltearms begrenzt ist. Durch die begrenzte Herausschwenkbarkeit des Gerätehalters können die benötigten Küchengeräte, wie z.B. Messer oder Rührlöffel leicht entnommen und wieder abgelegt werden.

Dabei ist eine Ausgestaltung günstig, die dadurch gekennzeichnet ist, daß die gelenkige Lagerung mittels einer an der Unterseite der als Block ausgestalteten Aufnahmeeinheit vorgesehenen Nut gebildet ist, in die die untere Horizontalstrebe eingreift, und daß der Haltearm an der Aufnahmeeinheit gelenkig angebracht ist und mit einem an seinem freien Ende vorgesehenen Hakenabschnitt an der zugeordneten Vertikalstrebe bzw. Zwischenstrebe im ausgeschwenkten Zustand gehalten ist und daß die Nut in Tiefenrichtung vor der Mittelebene der Aufnahmeeinheit angeordnet ist, so daß sie im eingeschwenkten Zustand infolge des hinter der Schwenkachse befindlichen Schwerpunkts gehalten ist. Hierdurch erübrigen sich zusätzliche Haltemittel.

Die Maßnahme, daß auf der Rückseite der Aufnahmeeinheit eine weitere Schneidplatte mittels eines Halteteils gehalten ist, ergibt eine weitere Verwendungsmöglichkeit.

Für eine geordnete Unterbringung beispielsweise von Gewürzen ist vorteilhaft vorgesehen, daß die Vertikalträgereinheit mehrere horizontale Querstreben aufweist, die als Tragemittel oder Ständer für Speisezutaten dienen, und daß der Träger für die Vertikalträgereinheit als Haltestange ausgebildet ist, die seitlich mittels Befestigungsstreben an der senkrechten Wand angebracht ist.

Die Erfindung wird nachfolgend anhand eines Ausführungsbeispiels unter Bezugnahme auf die Zeichnungen näher erläutert. Es zeigen:
- Fig. 1: ein Küchengerät mit einer an einer senkrechten Wand angebrachten Vertikalträgereinheit und einem auf eine Arbeitsplatte abgeklappten Schwenkträger sowie einem eingeschwenkten Gerätehalter in perspektivischer Ansicht,
- Fig. 2: eine Darstellung entsprechend Fig. 1 mit dem Unterschied, daß der Schwenkträger herausgeschwenkt ist,
- Fig. 3: eine in den Figuren 1 und 2 gezeigte Schneidunterlage in umgedrehter Lage zur Benutzung als Servierplatte und
- Fig. 4: den in den Figuren 1 und 2 dargestellen Gerätehalter mit einem Halteteil für eine weitere Schneidplatte.

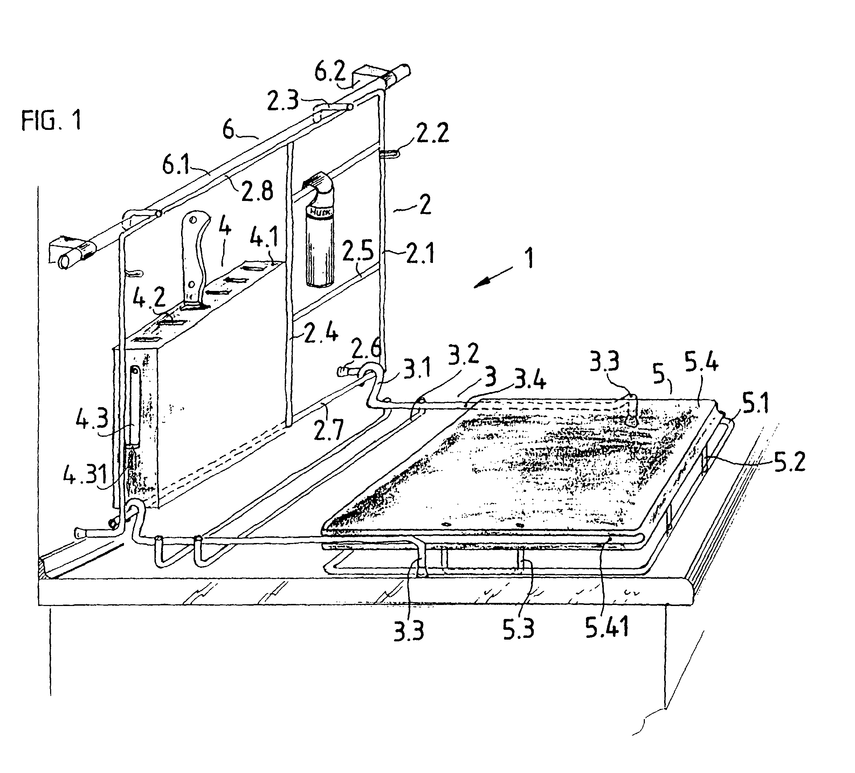

Die Fig. 1 zeigt ein Küchengerät 1 mit einer an einer senkrechten Wand angebrachten Vertikalträgereinheit 2 und einem an dieser schwenkbar gehaltenen, auf eine Arbeitsplatte horizontal abgeschwenkten Schwenkträger 3.

Die Vertikalträgereinheit 2 weist zwei seitliche Vertikalstreben 2.1 sowie eine dazwischen angeordnete vertikale Zwischenstrebe 2.4, eine obere und eine untere Horizontalstrebe 2.8 bzw. 2.7 sowie zwei horizontale Querstreben 2.5 auf. An der oberen Horizontalschiene 2.8 sind zwei zur Wand gerichtete hakenförmige Haltestücke 2.3 befestigt, mit denen die Vertikalträgereinheit 2 an einer Haltestange 6.1 eines Trägers 6 eingehängt ist. An ihren unteren Endbereichen sind die Vertikalstreben 2.1 rechtwinklig zur senkrechten Wand hin abgebogen, so daß die Vertikalträgereinheit 2 an der Wand exakt vertikal abgestützt ist. Zum Halten des Schwenkträgers 3 sind an den Vertikalstreben 2.1 U-förmig gebogene, federnde Halteelemente befestigt, die derart geformt sind, daß der Schwenkträger 3 mit Tiefenstreben 3.4 an diesen eingeschnappt werden kann.

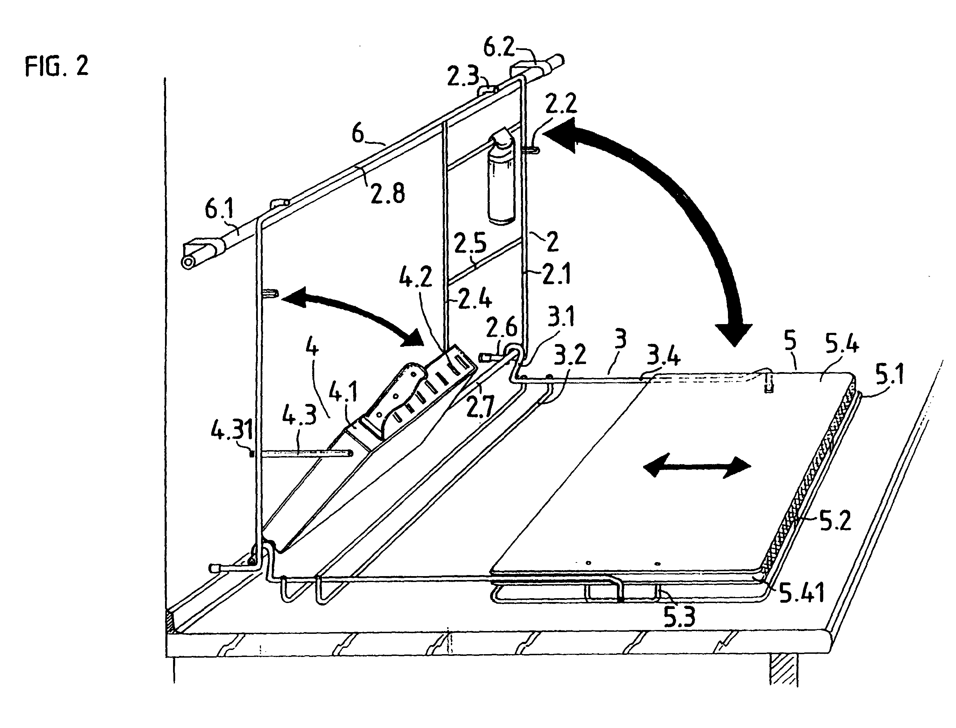

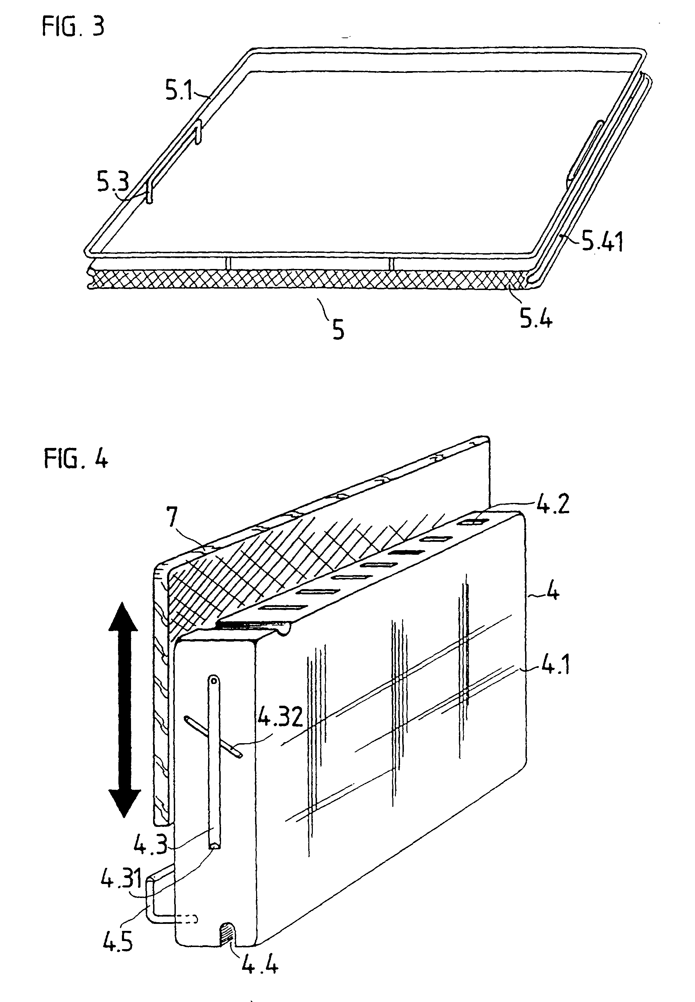

Zwischen der linken Vertikalstrebe 2.1 und der Zwischenstrebe 2.4 ist ein Gerätehalter 4 in Form eines Messerblocks gelenkig angeordnet. Zur Aufnahme von Messern weist eine Aufnahmeeinheit 4.1 des Messerblocks Aufnahmeschlitze oder auch ähnliche Vertiefungen zur Aufnahme anderer Geräte, wie z.B. Rührlöffel, auf, wodurch Aufnahmemittel 4.2 gebildet werden. Seitlich ist an dem Gerätehalter 4 ein schwenkbarer Haltearm 4.3 angebracht, der an seiner Unterseite einen Hakenabschnitt 4.31 besitzt. Wie aus Fig. 2 ersichtlich, wird der Gerätehalter 4 mit dem Haltearm 4.3 und dem Hakenabschnitt 4.31 an der benachbarten Vertikalstrebe 2.1 festgehalten, so daß der Gerätehalter 4 schräg nach oben gerichtet ist und die Geräte leicht aus diesem entnommen und in diesen wieder hineingesteckt werden können. Die Schwenklagerung ist durch eine Lagerstelle 4.4 in Form einer Nut gebildet, mit der der Gerätehalter auf die untere Horizontalstrebe 2.7 aufgesetzt ist. Die Nut 4.4 ist in Fig. 4 deutlich dargestellt. In Fig. 4 ist auch zu erkennen, daß die Nut 4.4 vor einer vertikalen Mittelebene des blockförmigen Gerätehalters 4 angeordnet ist, so daß im eingeschwenkten Zustand des Gerätehalters 4 der Schwerpunkt bei senkrechter Anordnung hinter der Schwenkachse liegt und der Gerätehalter 4 ohne weitere Haltemittel in seiner vertikalen Lage gehalten wird. Die Fig. 4 zeigt weiterhin einen Führungsabschnitt 4.32, in der der Haltearm 4.3 beim Verschwenken sicher geführt ist. Außerdem ist auf der Rückseite des blockartigen Gerätehalters 4 ein Halteteil 4.5 vorgesehen, mit dem eine weitere, kleine Schneidplatte 7 gehalten werden kann, so daß diese vorteilhaft untergebracht ist.

Durch die Querstreben 2.5 und gegebenenfalls weitere Querstreben oder Tragemittel oder Ständer können Speisezutaten, wie z.B. Gewürze gut greifbar aufbewahrt werden. Die Haltestange 6.1 des Trägers 6 ist mit seitlichen Befestigungsteilen 6.2 an der vertikalen Wand angebracht.

Die Tiefenstreben 3.4 sind an ihren zu der Wand gerichteten Endbereichen zunächst nach oben und dann in einer Rundung nach unten abgebogen, so daß sich Hakenteile 3.1 ergeben, mit denen der Schwenkträger 3 an der unteren Horizontalstrebe 2.7 einfach schwenkbar und abnehmbar eingehängt ist. Die untere Horizontalstrebe 2.7 ist einige Zentimeter, z.B. 5 bis 10 Zentimeter oberhalb der Arbeitsplatte angeordnet, und auch die Tiefenstreben 3.4 sind von der Arbeitsplatte beabstandet, wobei der hintere Bereich mittels zweier die beiden Tiefenstreben verbindender Verbindungsstreben 3.2 verbunden und ggf. zusätzlich abgestützt ist, die an ihren Enden senkrecht nach oben abgebogen und an den Tiefenstreben 3.4 befestigt sind. An ihrem vorderen Bereich sind die Tiefenstreben 3.4 etwas nach außen und dann im wesentlichen senkrecht nach unten abgebogen und stützen sich mit den so gebildeten Fußabschnitten 3.3 auf der Arbeitsplatte auf, wobei der Abstand der unteren Horizontalstrebe 2.7 von der Arbeitsplatte und die Länge der Fußabschnitte 3.3 der Tiefenstreben 3.4 so aufeinander abgestimmt sind, daß die Tiefenstreben 3.4 im wesentlichen horizontal verlaufen. Auch andere Abstützungen der Tiefenstreben als die gezeigten, z.B. eine andere Anzahl oder Anordnung von Verbindungsstreben ist denkbar.

Die Figuren 1 und 2 zeigen weiterhin eine aus dem Schwenkträger 3 nach vorne herausgezogene Schneidunterlage 5, die in ihrem hinteren Bereich noch von den Tiefenstreben 3.4 geführt ist und nach unten mit einem rundum verlaufenden Rahmenteil 5.1 und daran befestigter Verbindungsstücke 5.2 und mit seitlichen Griffen 5.3 auf der Arbeitsplatte abgestützt ist. Hierdurch ergibt sich nicht nur eine gute Abstützung einer z.B. aus Holz, Kunststoff oder Metall bestehenden Schneidplatte 5.4, sondern diese kann auch im umgedrehten Zustand als Servierplatte verwendet werden, wie in Fig. 3 gezeigt. Die Schneidunterlage 5 besitzt seitliche Führungsnuten 5.41, mit denen sie sicher in dem Schwenkträger 3 geführt ist. Zum Einklappen wird die Schneidunterlage 5 zunächst nach hinten zur Wand eingeschoben, wonach der Schwenkträger 3 mit der Schneidunterlage 5 nach oben geklappt und mit den Halteelementen 2.2 gehalten wird. Als Halteelemente kommen dabei auch z.B. Magnete oder andere hakenförmige Elemente in Frage, die nicht unbedingt an der Seite angeordnet sein müssen.

Die beschriebene Ausbildung bietet auf einfache Weise die Möglichkeit, die Vertikalträgereinheit 2, den Gerätehalter 4, den Schwenkträger 3 und die Schneidunterlage 5 ohne Betätigung von Schrauben oder dergleichen auseinanderzunehmen, wodurch die Benutzerfreundlichkeit wesentlich begünstigt wird. Auf diese Weise kann das Küchengerät sorgfältig gereinigt werden. Bei kompakter Ausführung bietet das Küchengerät vielerlei Benutzungsmöglichkeiten.

## Patentansprüche

1. Küchengerät mit einer an einer senkrechten Wand an einem Arbeitsfeld anbringbaren Vertikalträgereinheit (2) zur Aufnahme von Arbeitsgerät und/oder Speisezutaten und einer an dieser gehaltenen, in eine horizontale Lage schwenkbaren Schneidunterlage (5),
dadurch gekennzeichnet,
daß an der Vertikalträgereinheit (2) ein in eine horizontale Lage abschwenkbarer Schwenkträger (3) mit mindestens zwei im abgeschwenkten Zustand nach vorne verlaufenden seitlichen Tiefenstreben (3.4) gehalten ist und
daß die Schneidunterlage (5) an dem Schwenkträger (3) gehalten ist.

2. Küchengerät nach Anspruch 1,
dadurch gekennzeichnet,
daß die Schneidunterlage (5) in dem Schwenkträger (3) verschieblich gelagert ist.

3. Küchengerät nach Anspruch 1 oder 2,
dadurch gekennzeichnet,
daß die Vertikalträgereinheit (2) an ihrem unteren Randbereich eine im montierten Zustand einige Zentimeter von einer Arbeitsfläche beabstandete untere Horizontalstrebe (2.7) aufweist, an der die Tiefenstreben (3.4) des Schwenkträgers (4.1) mit an deren hinteren Enden durch Abbiegen gebildeten Hakenteilen (3.1) gelenkig gelagert sind,
daß die vorderen Enden der Tiefenstreben (3.4) so weit nach unten abgebogen sind, daß die Tiefenstreben (3.4) durch die so gebildeten, sich auf der Arbeitsfläche abstützenden Fußabschnitte (3.3) horizontal ausgerichtet sind und
daß die Schneidunterlage (5) seitliche Führungsmittel (5.41) aufweist, mit denen sie entlang der Tiefenstreben (3.4) verschiebbar ist.

4. Küchengerät nach Anspruch 3,
dadurch gekennzeichnet,
daß die Führungsmittel als in einer Schneidplatte (5.4) seitlich eingebrachte Führungsnuten (5.41) ausgebildet sind und
daß die Fußabschnitte (3.3) zur Seite abgebogen sind.

5. Küchengerät nach einem der Ansprüche 1 bis 4,
dadurch gekennzeichnet,
daß die Schneidunterlage (50) auf ihrer Unterseite nahe den beiden Schmalseiten jeweils einen Griff (5.3) sowie einen umlaufenden Rahmen (5.1, 5.2) trägt, so daß die Schneidunterlage (50) im umgedrehten Zustand als Servierplatte verwendbar ist.

6. Küchengerät nach einem der Ansprüche 1 bis 5,
dadurch gekenzeichnet,
daß die Vertikalträgereinheit (2) zwei seitliche Vertikalstreben (2.1) aufweist, an denen Halteelemente (2.2) vorgesehen sind, und
daß der Schwenkträger (3) im hochgeschwenkten Zustand mit seinen Tiefenstreben (3.4) an den Halteelementen (2.2) festgelegt ist.

7. Küchengerät nach einem der Ansprüche 1 bis 6,
dadurch gekennzeichnet,
daß die Vertikalträgereinheit (2) an einer oberen Horizontalschiene mindestens zwei Haltestücke (2.3) aufweist, mit denen sie an einem an der senkrechten Wand befestigten Träger (6) anbringbar ist, und
daß die Vertikalstreben (2.1) an ihren unteren Enden hin zur vertikalen Wand hin abgebogenen Stützteilen (2.6) auslaufen.

8. Küchengerät riach einem der Ansprüche 1 bis 7,
dadurch gekennzeichnet,
daß zwischen den beiden Vertikalstreben (2.1) oder einer Vertikalstrebe (2.1) und einer vertikalen Zwischenstrebe (2.4) oder zwischen zwei vertikalen Zwischenstreben ein an seinem unteren Endbereich gelenkig gelagerter Gerätehalter (4) herausschwenkbar angeordnet ist, dessen Ausschwenkbewegung mittels eines seitlichen, oberhalb der gelenkigen Lagerung beweglich angeordneten Haltearms (4.3) begrenzt ist.

9. Küchengerät nach Anspruch 8,
dadurch gekennzeichnet,
daß die gelenkige Lagerung mittels einer an der Unterseite der als Block ausgestalteten Aufnahmeeinheit (4.1) vorgesehenen Nut (4.4) gebildet ist, in die die untere Horizontalstrebe (2.7) eingreift,
daß der Haltearm (4.3) an der Aufnahmeeinheit (4.1) gelenkig angebracht ist und mit einem an seinem freien Ende vorgesehenen Hakenabschnitt (4.31) an der zugeordneten Vertikalstrebe (2.1) bzw. Zwischenstrebe (2.4) im ausgeschwenkten Zustand gehalten ist und
daß die Nut (4.4) in Tiefenrichtung vor der Mittelebene der Aufnahmeeinheit (4.1) angeordnet ist, so daß sie im eingeschwenkten Zustand infolge des hinter der Schwenkachse befindlichen Schwerpunkts gehalten ist.

10. Küchengerät nach Anspruch 8 oder 9,
dadurch gekennzeichnet,
daß auf der Rückseite der Aufnahmeeinheit (4.1) eine weitere Schneidplatte (7) mittels eines Halteteils (4.5) gehalten ist.

11. Küchengerät nach einem der Ansprüche 1 bis 10,
dadurch gekennzeichnet,
daß die Vertikalträgereinheit (2) mehrere horizontale Querstreben (2.5) aufweist, die als Tragemittel oder Ständer für Speisezutaten dienen, und daß der Träger (6) für die Vertikalträgereinheit als Haltestange (6.1) ausgebildet ist, die seitlich mittels Befestigungsstreben (6.2) an der senkrechten Wand angebracht ist.

## Claims

1. Kitchen appliance having a vertical carrier unit (2), which can be fitted on a vertical wall in a working area and is intended for accommodating equipment and/or ingredients, and a cutting base (5), which is retained on said vertical carrier unit and can be pivoted into a horizontal position, characterized in that retained on the vertical carrier unit (2) is a pivoting carrier (3) which can be pivoted into a horizontal position and has at least two lateral depthwise struts (3.4) which, in the pivoted-down state, run in the forward direction, and in that the cutting base (5) is retained on the pivoting carrier (3).

2. Kitchen appliance according to Claim 1, characterized in that the cutting base (5) is mounted displaceably in the pivoting carrier (3).

3. Kitchen appliance according to Claim 1 or 2, characterized in that, in its bottom border region, the vertical carrier unit (2) has a bottom horizontal strut (2.7) which, in the installed state, is spaced apart from a work surface by a few centimetres and on which the depthwise struts (3.4) of the pivoting carrier (3) are mounted in an articulated manner at their rear ends by hook parts (3.1) formed by bending, in that the front ends of the depthwise struts (3.4) are bent downwards to such an extent that the depthwise struts (3.4) are aligned horizontally by the resulting foot sections (3.3), which are supported on the work surface, and in that the cutting base (5) has lateral guide means (5.41) by means of which it can be displaced along the depthwise struts (3.4).

4. Kitchen appliance according to Claim 3, characterized in that the guide means are designed as guide grooves (5.41) made in the sides of a cutting board (5.4), and in that the foot sections (3.3) are bent to the side.

5. Kitchen appliance according to one of Claims 1 to 4, characterized in that the cutting base (5) has, on its underside, in each case one handle (5.3) in the vicinity of the two narrow sides and bears a peripheral frame (5.1, 5.2), with the result that the cutting base (5) can be used, once it has been turned upside down, as a serving tray.

6. Kitchen appliance according to one of Claims 1 to 5, characterized in that the vertical carrier unit (2) has two lateral vertical struts (2.1) on which retaining elements (2.2) are provided, and in that the pivoting carrier (3), in the pivoted-up state, is secured on the retaining elements (2.2) by way of its depthwise struts (3.4).

7. Kitchen appliance according to one of Claims 1 to 6, characterized in that, on a top horizontal rail, the vertical carrier unit (2) has at least two retaining members (2.3) by means of which it can be fitted on a carrier (6) fastened on the vertical wall, and in that the vertical struts (2.1) terminate at their bottom ends in supporting parts (2.6) which are bent in the direction of the vertical wall.

8. Kitchen appliance according to one of Claims 1 to 7, characterized in that a utensil holder (4) which is mounted in an articulated manner at its bottom end region is arranged such that it can be pivoted out between the two vertical struts (2.1) or a vertical strap (2.1) and a vertical intermediate strap (2.4) or between two vertical intermediate struts, the pivoting-out movement of said utensil holder being limited by means of a lateral retaining arm (4.3) which is arranged in a movable manner above the articulated mounting.

9. Kitchen appliance according to Claim 8, characterized in that the articulated mounting is formed by means of a groove (4.4) which is provided on the underside of the accommodating unit (4.1), configured as a block, and in which the bottom horizontal strap (2.7) engages, in that the retaining arm (4.3) is fitted in an articulated manner on the accommodating unit (4.1) and is retained on the associated vertical strap (2.1) or intermediate strap (2.4) in the pivoted-out state by way of a hook section (4.31) provided at its free end, and in that the groove (4.4) is arranged in front of the centre plane of the accommodating unit (4.1), as seen in the depthwise direction, with the result that said unit is retained in the pivoted-in state as a result of the centre of gravity located behind the pivot axis.

10. Kitchen appliance according to Claim 8 or 9, characterized in that a further cutting board (7) is retained by means of a retaining part (4.5) on the rear side of the accommodating unit (4.1).

11. Kitchen appliance according to one of Claims 1 to 10, characterized in that the vertical carrier unit (2) has a plurality of horizontal transverse struts (2.5) which serve as carrying means or stands for ingredients, and in that the carrier (6) for the vertical carrier unit is designed as a retaining rod (6.1) which is fitted laterally on the vertical wall by means of fastening struts (6.2).

## Revendications

1. Appareil de cuisine comprenant une unité de support verticale (2) pouvant être appliquée contre une paroi verticale sur un plan de travail pour recevoir un appareil de travail et/ou des ingrédients alimentaires, et un support de coupe (5) pivotable dans une position horizontale et maintenu contre ladite unité, caractérisé en ce qu'un support pivotant (3) rabattable dans une position horizontale est maintenu sur l'unité de support verticale (2) avec au moins deux montants profonds (3.4) latéraux s'étendant vers l'avant dans l'état rabattu, et en ce que le support de coupe (5) est fixé sur le support pivotant (3).

2. Appareil de cuisine selon la revendication 1, caractérisé en ce que le support de coupe (5) est monté de manière déplaçable dans le support pivotant (3).

3. Appareil de cuisine selon la revendication 1 ou 2, caractérisé en ce que l'unité de support verticale (2) présente, sur sa partie de bord inférieure, un montant horizontal (2.7) inférieur espacé de quelques centimètres d'une surface de travail dans l'état monté, auquel sont articulés les montants profonds (3.4) du support pivotant (3) avec des parties de crochet (3.1) formées par des courbures aux extrémités de ceux-ci, en ce que les extrémités avant des montants profonds (3.4) sont recourbées vers le bas de telle sorte que les montants profonds (3.4) soient orientés horizontalement par l'intermédiaire des portions de pied (3.3) ainsi formées s'appuyant contre la surface de travail, et en ce que le support de coupe (5) présente des moyens de guidage latéraux (5.41) grâce auxquels il peut être déplacé le long des montants profonds (3.4).

4. Appareil de cuisine selon la revendication 3, caractérisé en ce que les moyens de guidage sont formés en tant que rainures de guidage (5.41) montées latéralement dans une plaque de coupe (5.4) et en ce que les portions de pied (3.3) sont recourbées vers le côté.

5. Appareil de cuisine selon l'une quelconque des revendications 1 à 4, caractérisé en ce que le support de coupe (50) porte sur sa face inférieure à proximité des deux petits côtés, à chaque fois une poignée (5.3) ainsi qu'un cadre périphérique (5.1, 5.2), de sorte que le support de coupe (50) puisse être utilisé dans l'état retourné en tant que plateau de service.

6. Appareil de cuisine selon l'une quelconque des revendications 1 à 5, caractérisé en ce que l'unité de support verticale (2) présente deux montants verticaux latéraux (2.1), sur lesquels sont prévus des éléments de fixation (2.2), et en ce que dans l'état rabattu vers le haut, le support pivotant (3) est fixé avec ses montants profonds (3.4) aux éléments de fixation (2.2).

7. Appareil de cuisine selon l'une quelconque des revendications 1 à 6, caractérisé en ce que l'unité de support verticale (2) présente au moins deux pièces de fixation (2.3) sur un rail supérieur horizontal, avec lesquelles elle peut être appliquée contre un support (6) fixé contre la paroi verticale, et en ce que les montants verticaux (2.1) se terminent à leurs extrémités inférieures en direction de la paroi verticale par des pièces de support recourbées (2.6).

8. Appareil de cuisine selon l'une quelconque des revendications 1 à 7, caractérisé en ce qu'entre les deux montants verticaux (2.1) ou entre un montant vertical (2.1) et un montant intermédiaire vertical (2.4) ou entre deux montants intermédiaires verticaux, est disposé de manière pivotable vers l'extérieur un support d'appareil (4) monté de manière articulée au niveau de sa partie d'extrémité inférieure, dont le mouvement de pivotement vers l'extérieur est limité par un bras de fixation (4.3) latéral, disposé mobile au-dessus du support articulé.

9. Appareil de cuisine selon la revendication 8, caractérisé en ce que le support articulé est formé au moyen d'une rainure (4.4) prévue sur la face inférieure de l'unité de réception (4.1) en forme de bloc, dans laquelle s'engage le montant horizontal inférieur (2.7), en ce que le bras de fixation (4.3) est monté de manière articulée sur l'unité de réception (4.1) et est fixé avec une portion de crochet (4.31) prévue sur son extrémité libre, au montant vertical (2.1) ou au montant intermédiaire (2.4) associé dans l'état pivoté vers l'extérieur, et en ce que la rainure (4.4) est disposée dans la direction de la profondeur avant le plan médian de l'unité de réception (4.1), de sorte que celle-ci soit fixée dans l'état pivoté vers l'intérieur en raison du centre de gravité se trouvant derrière l'axe de pivotement.

10. Appareil de cuisine selon la revendication 8 ou 9, caractérisé en ce qu'une autre plaque de coupe (7) est fixée sur la face arrière de l'unité de réception (4.1) au moyen d'une pièce de fixation (4.5).

11. Appareil de cuisine selon l'une quelconque des revendications 1 à 10, caractérisé en ce que l'unité de support verticale (2) présente plusieurs traverses horizontales (2.5) qui servent de moyens de support ou d'accrochage pour des ingrédients alimentaires, et en ce que le support (6) est formé en tant que barre de fixation (6.1) pour l'unité de support verticale, laquelle est montée latéralement au moyen de montants de fixation (6.2) sur la paroi verticale.
